# EUROPÄISCHE PATENTSCHRIFT

(11) **EP 3 236 178 B1**
(45) Veröffentlichungstag und Bekanntmachung des Hinweises auf die Patenterteilung: **12.08.2020**
(21) Anmeldenummer: 16166600.3
(22) Anmeldetag: 22.04.2016
(51) Int. Cl.: F25B 25/02, F25B 37/00, F25B 40/00, F25B 15/04, F25B 15/00, F25B 1/10

(54) **SORPTIONSWÄRMEPUMPE UND SORPTIONSKREISPROZESS**
SORPTION HEAT PUMP AND SORPTION CIRCUIT PROCESS
POMPE A CHALEUR A ABSORPTION ET PROCEDE DE CIRCUIT A ABSORPTION

(43) Veröffentlichungstag der Anmeldung: 25.10.2017
(73) Patentinhaber: AGO AG Energie + Anlagen, 95326 Kulmbach (DE)
(72) Erfinder: Ramming, Klaus, 95336 Mainleus (DE)
(74) Vertreter: Bauer, Dirk

(56) Entgegenhaltungen:
- DE-A1-102012 017 314
- DE-C1- 3 808 257
- FR-A1- 2 758 616
- US-A- 4 475 361
- US-A- 5 791 157
- US-A1- 2013 167 581

## Beschreibung

Die Erfindung betrifft zunächst eine Sorptionswärmepumpe mit gasförmigen Kältemittel und flüssigen Lösungsmittel, einer abgereicherten und einer reichen Lösung, wobei die abgereicherte und die reiche Lösung einphasige Mischungen des Lösungsmittels und des Kältemittels sind, sowie mit einem Absorber, in dem die abgereicherte Lösung das Kältemittel absorbiert und dabei Wärme abgibt, einem Drosselventil, das die reiche Lösung entspannt, einem Austreiber, in dem die reiche Lösung Wärme aufnimmt und dabei das Kältemittel austreibt, einem Verdichter, der das Kältemittel verdichtet, und einer Pumpe, die die abgereicherte Lösung pumpt, wobei Rohrleitungen in dieser Reihenfolge den Absorber, das Drosselventil und den Austreiber sowie parallel zueinander einerseits den Verdichter und andererseits die Pumpe zu einem kreisförmig geschlossenen System verbinden. Die Erfindung betrifft weiter einen Sorptionskreisprozess zum Betreiben einer solchen Sorptionswärmepumpe.

Solche Sorptionswärmepumpen und -kreisprozesse sind bekannt aus DD 236979 A1, CN 1240953 A1 und DE 3808257 C1. Dokument DE 3808257 C1 offenbart eine Sorptionswärmepumpe gemäß dem Oberbegriff des Anspruchs 1 sowie einen Sorptionskreisprozess gemäß dem Oberbegriff des Anspruchs 7. In den bekannten

Sorptionswärmepumpen und -kreisprozessen wird ein mit der Ausgangstemperatur des im Absorber aufgeheizten Mediums steigender Anteil der in der reichen Lösung zur Verfügung stehenden Wärme nicht zur Vorwärmung der armen Lösung genutzt.

### Aufgabe

Der Erfindung liegt die Aufgabe zugrunde, die energetische Effizienz und die Ausgangstemperatur des im Absorber geheizten Mediums zu steigern.

### Lösung

Ausgehend von der bekannten Sorptionswärmepumpe wird nach der Erfindung vorgeschlagen, einen zweiten Austreiber hinter dem Austreiber vorzusehen, in dem die abgereicherte Lösung Wärme aus der reichen Lösung aufnimmt und dabei zweites gasförmiges Kältemittel austreibt. Eine Sorptionswärmepumpe gemäß Anspruch 1 wird bereitgestellt.

Anstatt die Wärme lediglich sensibel von der reichen Lösung an die arme Lösung zu verschieben, wird die intern anfallende Wärme zur Erhöhung der Konzentrationsdifferenz zwischen reicher und armer Lösung genutzt. Hierdurch wird nicht nur die Ausgangstemperatur des im Absorber geheizten Mediums erhöht, sondern auch mehr Wärme intern zurückgewonnen und so die energetische Effizienz gesteigert.

Vorzugsweise ist eine zweite Pumpe vorzusehen, die eine arme Lösung pumpt, wobei die arme Lösung eine zweite einphasige Mischung des Lösungsmittels und des Kältemittels ist, und ein zweiter Verdichter, der das zweite Kältemittel weiter verdichtet, wobei Bypassleitungen den zweiten Austreiber parallel zueinander einerseits über die zweite Pumpe mit dem Absorber und andererseits mit einer Stichleitung verbinden, die das zweite Kältemittel mit dem Kältemittel zusammenführt.

Das Kältemittel, das auf der Mitteldruckstufe ausgetrieben wird muss lediglich vom Mitteldruck auf Hochdruck verdichtet werden und nicht von Niederdruck auf Hochdruck. Der technische Aufwand für die Kältemittelverdichtung sinkt hierdurch.

Vorzugsweise ist ein Heißgaskühler vorzusehen, in dem die abgereicherte Lösung aus dem verdichteten zweiten Kältemittel Wärme aufnimmt und dabei drittes gasförmiges Kältemittel austreibt.

Insbesondere bei einer zweistufigen Verdichtung des Kältemittels ist eine Zwischenkühlung erforderlich, damit die Heißgastemperatur nach dem zweiten Verdichter nicht zu hoch wird, was die üblichen Kälteverdichter nicht erlauben. Die Wärme aus dem Heißgaskühler kann bei dem Temperaturniveau intern und extern nicht sinnvoll in Form einer Medienerwärmung genutzt werden. Wird mit der Wärme zusätzliches Kältemittel ausgetrieben, wird die Wärme sinnvoll genutzt, wodurch sich die Effizienz erhöht.

Vorzugsweise ist ein Niederdruckaustreiber hinter dem Austreiber vorzusehen, in dem die abgereicherte Lösung Wärme aus der reichen Lösung vor dem Drosselventil aufnimmt und dabei viertes gasförmiges Kältemittel austreibt.

So wird Wärme mit niedriger Temperatur zum Austreiben von zusätzlichem Kältemittel genutzt und die reiche Lösung weiter abgekühlt, bevor sie in den Austreiber kommt, was die Effizienz erhöht.

Vorzugsweise ist ein Lösungswärmeübertrager vorzusehen, in dem die arme Lösung Wärme aus der reichen Lösung vor dem Drosselventil aufnimmt.

Solche Lösungswärmeübertrager sind allgemein bekannt.

Vorzugsweise ist das Lösungsmittel Wasser und das Kältemittel Ammoniak. Wasser und Ammoniak sind natürliche Stoffe und haben sich in der Kältetechnik bewährt.

Ausgehend von dem bekannten Sorptionskreisprozess wird nach der Erfindung vorgeschlagen, dass die abgereicherte Lösung Wärme aus der reichen Lösung aufnimmt und dabei zweites gasförmiges Kältemittel austreibt. Ein Sorptionskreisprozess gemäß Anspruch 7 wird bereitgestellt. Das erfindungsgemäße Verfahren wird mit einer der vorstehend beschriebenen Sorptionswärmepumpen ausgeführt und zeichnet sich gleichermaßen durch die dort aufgeführten Vorteile aus.

Vorzugsweise wird aus der abgereicherten Lösung nach Aufnehmen der Wärme das zweite Kältemittel abgeschieden, mit dem Kältemittel zusammengeführt und verdichtet, und eine arme Lösung gepumpt, wobei die arme Lösung eine zweite einphasige Mischung des Lösungsmittels und des Kältemittels ist.

Durch Aufnahme zusätzlicher Wärme wird mehr Kältemittel ausgetrieben. Dadurch erhöht sich die Konzentrationsdifferenz zwischen armer und reicher Lösung, wodurch eine geringere Lösungsmenge im Kreis gepumpt wird um die gleiche Kältemittelmenge zu transportieren.

Vorzugsweise gibt die abgereicherte Lösung beim Absorbieren des Kältemittels die Wärme an Hochdruckheißwasser mit einer Zulauftemperatur oberhalb 100 °C ab.

Die bekannten Sorptionswärmepumpen und -kreisprozesse erreichen mit Industriewärmepumpen keine Ausgangstemperatur des im Absorber geheizten Mediums über 100 °C.

Weiter vorzugsweise liegt die Zulauftemperatur oberhalb 120 °C.

Die bekannten Sorptionswärmepumpen und -kreisprozesse sind nicht mit Zulauftemperaturen oberhalb 120 °C nutzbar.

Vorzugsweise nimmt die entspannte reiche Lösung die Wärme aus Wasser mit einer Zulauftemperatur unterhalb 100 °C auf.

Diese Anwendung von Sorptionswärmepumpen und -kreisprozessen ist allgemein bekannt.

### Ausführungsbeispiel

Die Erfindung wird nachfolgend anhand von Ausführungsbeispielen erläutert. Es zeigen in schematischer Darstellung
- Fig. 1a: eine aus dem Stand der Technik bekannte Sorptionswärmepumpe und
- Fig. 1b: Druck-, Temperatur- und Sättigungsverläufe derselben,
- Fig. 2a: eine erste erfindungsgemäße Sorptionswärmepumpe und
- Fig. 2b: Druck-, Temperatur- und Sättigungsverläufe derselben,
- Fig. 3: eine zweite erfindungsgemäße Sorptionswärmepumpe,
- Fig. 4: eine dritte erfindungsgemäße Sorptionswärmepumpe und
- Fig. 5: eine vierte erfindungsgemäße Sorptionswärmepumpe.

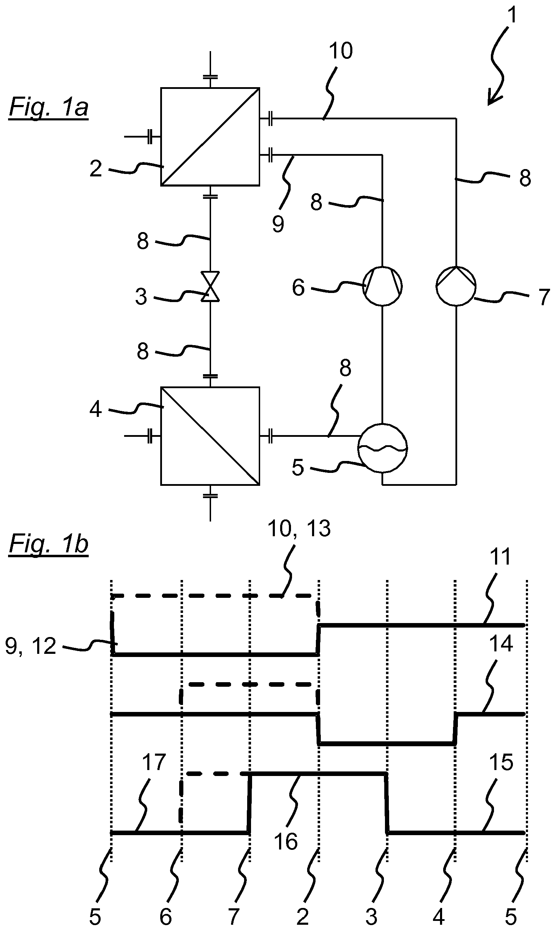

Das in Figur 1a gezeigte, aus dem Stand der Technik bekannte Sorptionswärmepumpe 1 weist einen Absorber 2, ein Drosselventil 3, einen Austreiber 4, einen Abscheider 5, einen Verdichter 6, eine Pumpe 7 sowie Rohrleitungen 8 auf, die die vorgenannten in dieser Reihenfolge zu einem kreisförmig geschlossenen System verbinden, wobei der Verdichter 6 in einem Kältemittelzweig 9 und die Pumpe 7 in einem dazu parallel verlaufenden Lösungsmittelzweig 10 vom Abscheider 5 zum Absorber 2 angeordnet sind. Figur 1b zeigt die Verläufe von Sättigung 11 des Lösungsmittels 12 mit dem Kältemittel 13, Temperatur 14 und Druck 15 in einem Zyklus eines Sorptionskreisprozesses in der bekannten Sorptionswärmepumpe 1, jeweils für das flüssige Lösungsmittel 12 (unabhängig von seiner Sättigung mit dem Kältemittel 13) und für das gasförmige Kältemittel 13: In der bekannten Sorptionswärmepumpe 1 gibt in dem Absorber 2 eine reiche Lösung von Ammoniak (NH₃) als Kältemittel 13 in Wasser als Lösungsmittel 12 auf einem Hochdruckniveau 16 Wärme ab, wird in dem Drosselventil 3 auf ein Niederdruckniveau 17 entspannt und nimmt in dem Austreiber 4 Wärme auf. Die derart entspannte, aufgeheizte reiche Lösung scheidet in dem Abscheider 5 gasförmiges Kältemittel 13 ab, die verbleibende abgereicherte Lösung wird von der Pumpe 7 in den Absorber 2 gefördert. Parallel wird das abgeschiedene Kältemittel 13 im Verdichter 6 auf das Hochdruckniveau 16 verdichtet, dadurch weiter aufgeheizt und gleichfalls in den Absorber 2 gefördert.

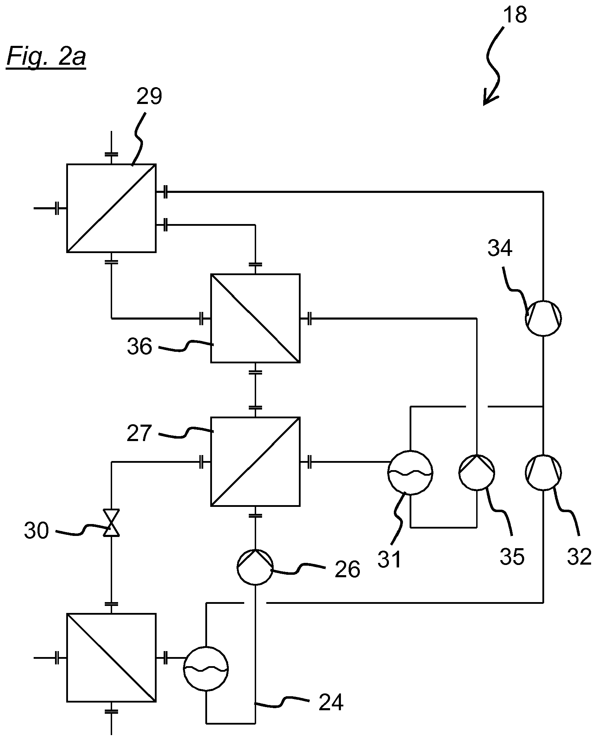

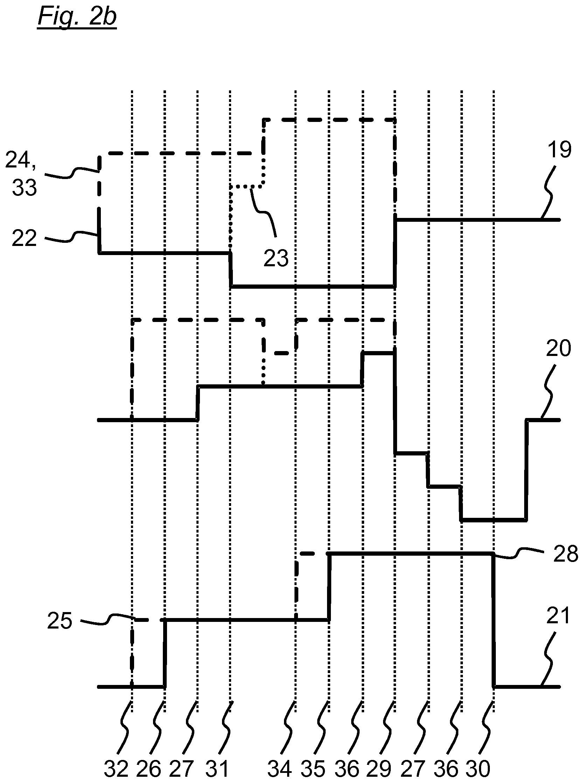

Die in Figur 2a dargestellte erste erfindungsgemäße Sorptionswärmepumpe 18 entspricht im Wesentlichen der aus dem Stand der Technik bekannten Sorptionswärmepumpe 1. Figur 2b zeigt wieder die Verläufe von Sättigung 19, Temperatur 20 und Druck 21 jeweils für Lösungsmittel 22 und Kältemittel 23 in einem Zyklus eines Sorptionskreisprozesses in der Sorptionswärmepumpe 18.

Abweichend von der bekannten Sorptionswärmepumpe 1 nimmt in der ersten erfindungsgemäßen Sorptionswärmepumpe 18 die im Lösungsmittelzweig 24 auf einem Mitteldruckniveau 25 aus einer zweiten Pumpe 26 dringende abgereicherte Lösung in einem zweiten Austreiber 27 Wärme auf, die aus der reichen Lösung auf dem Hochdruckniveau 28, also zwischen Absorber 29 und Drosselventil 30 bereitgestellt wird.

Die derart noch einmal aufgeheizte abgereicherte Lösung scheidet in einem zweiten Abscheider 31 zweites gasförmiges Kältemittel 23 ab, erst die verbleibende arme Lösung wird von einer zweiten Pumpe 32 in den Absorber 29 gefördert. Parallel wird das zweite abgeschiedene Kältemittel 23 hinter dem Verdichter 32 mit dem ersten abgeschiedenen Kältemittel 33 zusammengeführt, mit diesem zusammen in einem zweiten Verdichter 34 auf das Hochdruckniveau 28 verdichtet und gleichfalls in den Absorber 29 gefördert.

Die arme Lösung aus dem zweiten Abscheider 31 wird von einer zweiten Pumpe 35 durch einen Lösungswärmeübertrager 36 in den Absorber 29 gefördert. In dem Lösungswärmeübertrager 36 nimmt die arme Lösung Wärme aus der reichen Lösung zwischen Abscheider 29 und dem zweiten Austreiber 27 auf.

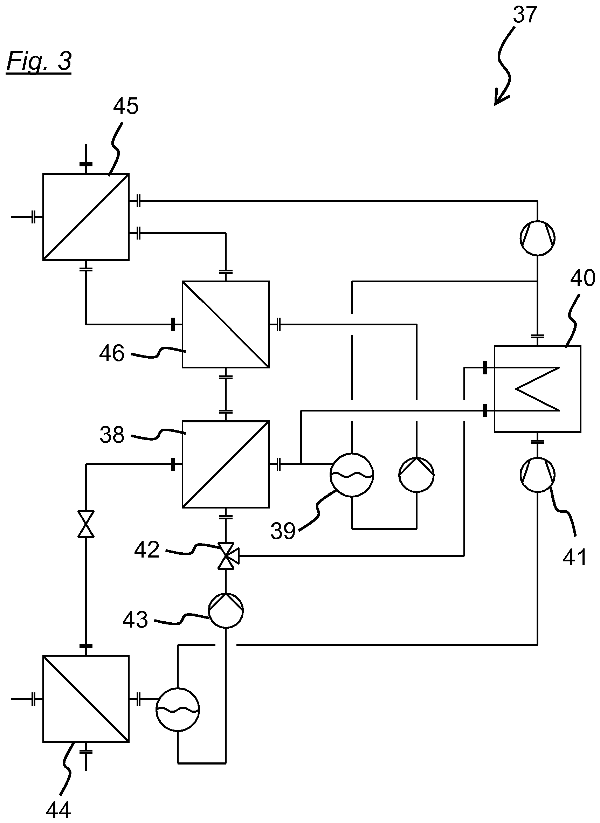

Die in Figur 3 dargestellte zweite erfindungsgemäße Sorptionswärmepumpe 37 entspricht im Wesentlichen der ersten Sorptionswärmepumpe 18. Abweichend wird in der zweiten Sorptionswärmepumpe 37 zwischen dem zweiten Austreiber 38 und dem zweiten Abscheider 39 ein Anteil der abgereicherten Lösung abgezweigt, nimmt in einem Heißgaskühler 40 aus dem verdichten Kältemittel zwischen dem Verdichter 41 und der Einleitung des zweiten Kältemittels Wärme auf und wird über ein Regelventil 42 zwischen der Pumpe 43 und dem zweiten Austreiber 38 wieder eingespeist.

Im Betrieb der zweiten Sorptionswärmepumpe 37 scheidet auf einem Niederdruckniveau von 8 *bar* und bei einer Temperatur von 85 °*C* die abgereicherte Lösung mit 40 % NH₃ im Austreiber 44 das erste Kältemittel mit 95 % NH₃ ab. Auf einem Mitteldruckniveau von 18 *bar* und bei einer Temperatur von 120 °*C* scheidet die arme Lösung mit nur noch 30 % NH₃ im zweiten Austreiber 38 das zweite Kältemittel ab. Im Heißgaskühler 40 wird das erste Kältemittel von 185 °*C* auf 100 °*C* abgekühlt, die abgezweigte arme Lösung wird dabei auf 127 °*C* aufgeheizt. Auf einem Hochdruckniveau von 34 *bar* werden das Kältemittel mit 93 % NH₃ auf einer Temperatur von 187 °*C* und die arme Lösung auf einer Temperatur von 128 °*C* in den Absorber 45 geführt, die reiche Lösung verlässt den Absorber 45 mit 133 °*C*. Im Lösungswärmeübertrager 46 wird die reiche Lösung auf 128 °*C,* im zweiten Austreiber 38 auf 86 °*C* und im Drosselventil 42 auf 76 °*C* abgekühlt

In der zweiten Sorptionswärmepumpe 37 wird so im Austreiber 44 durch Abkühlen von Wasser von 90 °*C* auf 80 °*C* Wärme aufgenommen und im Absorber 45 Hochdruckheißwasser von 130 °*C* auf 140 °*C* aufgeheizt.

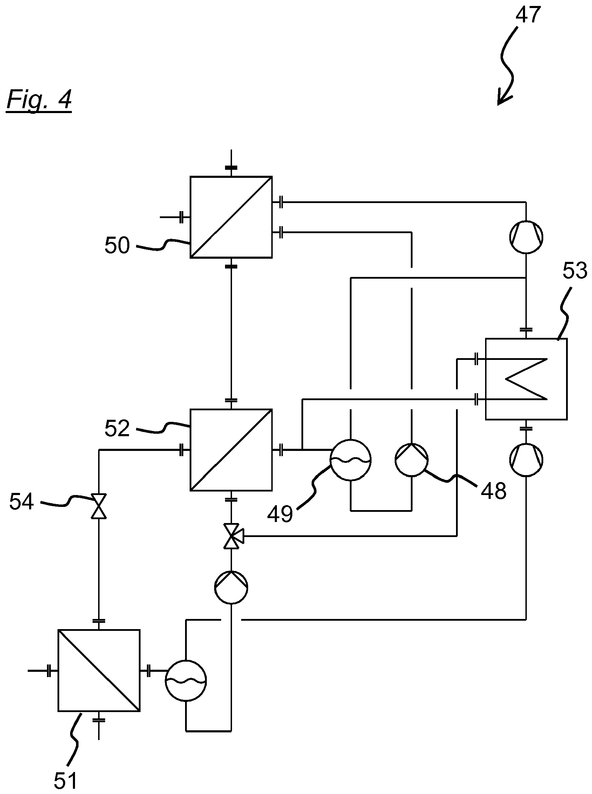

Die in Figur 4 dargestellte dritte erfindungsgemäße Sorptionswärmepumpe 47 entspricht im Wesentlichen der zweiten Sorptionswärmepumpe 37. Abweichend fördert die zweite Pumpe 48 in der dritten Sorptionswärmepumpe 47 die arme Lösung aus dem zweiten Abscheider 49 ohne weitere Wärme aufzunehmen unmittelbar in den Absorber 50.

Im Betrieb der dritten Sorptionswärmepumpe 47 scheidet auf einem Niederdruckniveau von 8 *bar* und bei einer Temperatur von 85 °*C* die abgereicherte Lösung im Austreiber 51 das erste Kältemittel mit 40 % NH₃ ab. Auf einem Mitteldruckniveau von 18 *bar* und bei einer Temperatur von 127 °*C* scheidet die arme Lösung mit nur noch 30 % NH₃ im zweiten Austreiber 52 das zweite Kältemittel ab. Im Heißgaskühler 53 wird das erste Kältemittel von 185 °*C* auf 100 °*C* abgekühlt, die abgezweigte arme Lösung wird dabei auf 175 °*C* aufgeheizt. Auf einem Hochdruckniveau von 34 *bar* werden das Kältemittel mit 94 % NH₃ auf einer Temperatur von 187 °*C* und die arme Lösung auf einer Temperatur von 128 °*C* in den Absorber 50 geführt, die reiche Lösung verlässt den Absorber 50 mit 133 °*C*. Im zweiten Austreiber 52 wird die reiche Lösung auf 87 °*C* und im Drosselventil 54 auf 76 °*C* abgekühlt

In der dritten Sorptionswärmepumpe 47 wird so im Austreiber 51 durch Abkühlen von Wasser von 90 °*C* auf 80 °*C* Wärme aufgenommen und im Absorber 50 Hochdruckheißwasser von 130 °*C* auf 140 °*C* aufgeheizt.

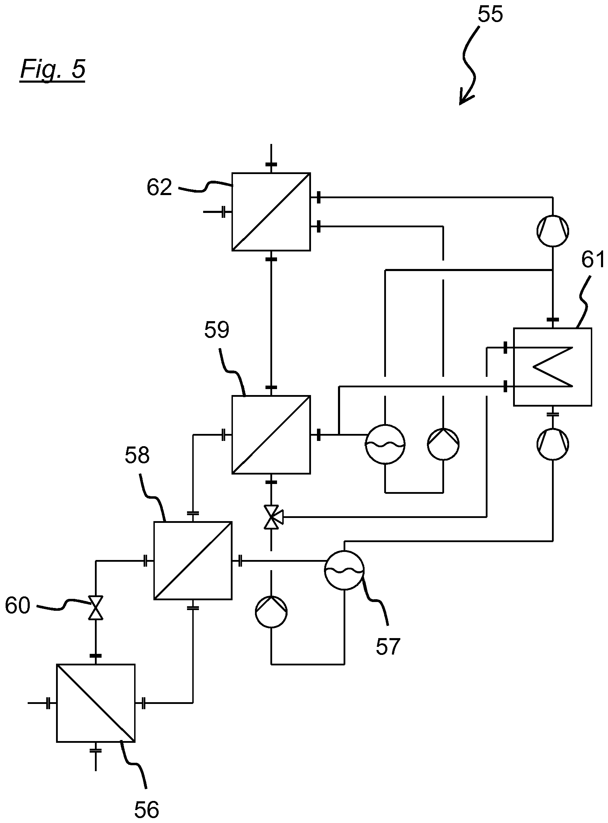

Die in Figur 5 dargestellte vierte erfindungsgemäße Sorptionswärmepumpe 55 entspricht im Wesentlichen der dritten Sorptionswärmepumpe 47. Abweichend nimmt die abgereichte Lösung zwischen dem Austreiber 56 und dem Abscheider 57 in einem Niederdruckaustreiber 58 aus der reichen Lösung zwischen dem zweiten Austreiber 59 und dem Drosselventil 60 weitere Wärme auf.

Im Betrieb der vierten Sorptionswärmepumpe 55 scheidet auf einem Niederdruckniveau von 10 *bar* und bei einer Temperatur von 88 °*C* die abgereicherte Lösung mit 36 % NH₃ zunächst im Austreiber 56 und dann im Niederdruckaustreiber 58 das erste Kältemittel mit 95 % NH₃ ab. Auf einem Mitteldruckniveau von 20 *bar* und bei einer Temperatur von 121 °*C* scheidet die arme Lösung mit nur noch 35 % NH₃ im zweiten Austreiber 59 das zweite Kältemittel ab. Im Heißgaskühler 61 wird das erste Kältemittel von 177 °*C* auf 110 °*C* abgekühlt, die abgezweigte arme Lösung wird dabei auf 127 °*C* aufgeheizt. Auf einem Hochdruckniveau werden das Kältemittel auf einer Temperatur von 180 °*C* und die arme Lösung in den Absorber 62 geführt, die reiche Lösung mit 45 % NH₃ verlässt den Absorber 62 mit 123 °*C*. Im zweiten Austreiber 59 wird die reiche Lösung auf 95 °*C*, im Niederdruckaustreiber 58 auf 87 °*C* und im Drosselventil 60 auf 75 °*C* abgekühlt.

In der vierten Sorptionswärmepumpe 55 wird so im Austreiber 56 durch Abkühlen von Wasser von 90 °*C* auf 78 °*C* Wärme aufgenommen und im Absorber 62 Hochdruckheißwasser von 120 °*C* auf 130 °*C* aufgeheizt.

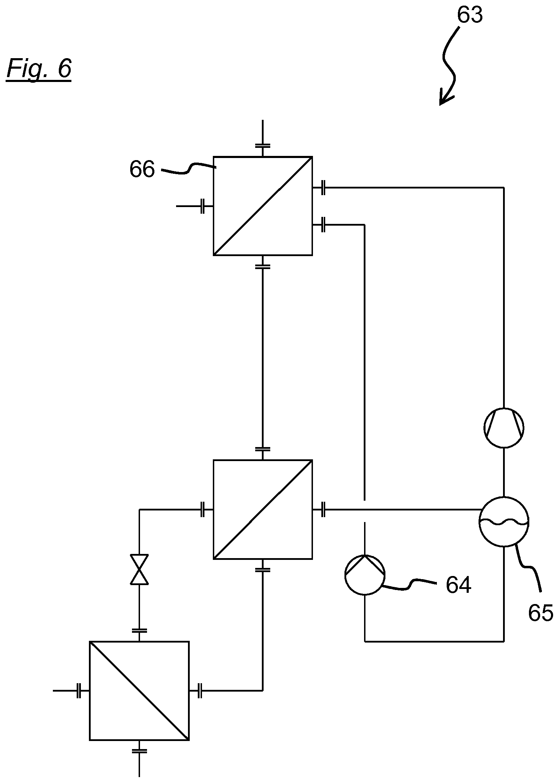

Die in Figur 6 dargestellte fünfte erfindungsgemäße Sorptionswärmepumpe 63 entspricht im Wesentlichen der vierten Sorptionswärmepumpe 55. Abweichend fördert die Pumpe 64 in der fünften Sorptionswärmepumpe die abgereicherte Lösung aus dem Abscheider 65 ohne weitere Wärme aufzunehmen oder weiteres Kältemittel abzuscheiden unmittelbar in den Absorber 66.

In den Figuren sind
- 1: Sorptionswärmepumpe
- 2: Absorber
- 3: Drosselventil
- 4: Austreiber
- 5: Abscheider
- 6: Verdichter
- 7: Pumpe
- 8: Rohrleitung
- 9: Kältemittelzweig
- 10: Lösungsmittelzweig
- 11: Sättigung
- 12: Lösungsmittel
- 13: Kältemittel
- 14: Temperatur
- 15: Druck
- 16: Hochdruckniveau
- 17: Niederdruckniveau
- 18: Sorptionswärmepumpe
- 19: Sättigung
- 20: Temperatur
- 21: Druck
- 22: Lösungsmittel
- 23: Kältemittel
- 24: Lösungsmittelzweig
- 25: Mitteldruckniveau
- 26: Pumpe
- 27: Austreiber
- 28: Hochdruckniveau
- 29: Absorber
- 30: Drosselventil
- 31: Abscheider
- 32: Verdichter
- 33: Kältemittel
- 34: Verdichter
- 35: Pumpe
- 36: Lösungswärmeübertrager
- 37: Sorptionswärmepumpe
- 38: Austreiber
- 39: Abscheider
- 40: Heißgaskühler
- 41: Verdichter
- 42: Regelventil
- 43: Pumpe
- 44: Austreiber
- 45: Absorber
- 46: Lösungswärmeübertrager
- 47: Sorptionswärmepumpe
- 48: Pumpe
- 49: Abscheider
- 50: Absorber
- 51: Austreiber
- 52: Austreiber
- 53: Heißgaskühler
- 54: Drosselventil
- 55: Sorptionswärmepumpe
- 56: Austreiber
- 57: Abscheider
- 58: Niederdruckaustreiber
- 59: Austreiber
- 60: Drosselventil
- 61: Heißgaskühler
- 62: Absorber
- 63: Sorptionswärmepumpe
- 64: Pumpe
- 65: Abscheider
- 66: Absorber

## Patentansprüche

1. Sorptionswärmepumpe (18, 37, 47, 55, 63) mit gasförmigen Kältemittel (33) und flüssigen Lösungsmittel (22), einer abgereicherten und einer reichen Lösung, wobei die abgereicherte und die reiche Lösung einphasige Mischungen des Lösungsmittels (22) und des Kältemittels (33) sind, sowie mit einem Absorber (29, 45, 50, 62, 66), in dem die abgereicherte Lösung das Kältemittel (33) absorbiert und dabei Wärme abgibt, einem Drosselventil (30, 54, 60), das die reiche Lösung entspannt, einem Austreiber (44, 51, 56), in dem die reiche Lösung Wärme aufnimmt und dabei das Kältemittel (33) austreibt, einem Verdichter (32, 41), der das Kältemittel (33) verdichtet, und einer Pumpe (26, 43, 64), die die abgereicherte Lösung pumpt, wobei Rohrleitungen in dieser Reihenfolge den Absorber (29, 45, 50, 62, 66), das Drosselventil (30, 54, 60) und den Austreiber (44, 51, 56) sowie parallel zueinander einerseits den Verdichter (32, 41) und andererseits die Pumpe (26, 43, 64) zu einem kreisförmig geschlossenen System verbinden, ***gekennzeichnet durch*** einen zweiten Austreiber (27, 38, 52, 59) hinter dem Austreiber (44, 51, 56), in dem die abgereicherte Lösung Wärme aus der reichen Lösung aufnimmt und dabei zweites gasförmiges Kältemittel (23) austreibt.

2. Sorptionswärmepumpe (18, 37, 47, 55) nach dem vorgenannten Anspruch, ***gekennzeichnet durch*** eine zweite Pumpe (35), die eine arme Lösung pumpt, wobei die arme Lösung eine zweite einphasige Mischung des Lösungsmittels (22) und des Kältemittels (33) ist, und einen zweiten Verdichter (34), der das zweite Kältemittel (23) weiter verdichtet, wobei Bypassleitungen den zweiten Austreiber (27, 38, 52, 59) parallel zueinander einerseits über die zweite Pumpe (35, 48) mit dem Absorber (29, 45, 50, 62) und andererseits mit einer Stichleitung verbinden, die das zweite Kältemittel (23) mit dem Kältemittel (33) zusammenführt.

3. Sorptionswärmepumpe (18, 37, 47, 55) nach einem der vorgenannten Ansprüche, ***gekennzeichnet durch*** einen Heißgaskühler (40, 53, 61), in dem die abgereicherte Lösung aus dem verdichteten zweiten Kältemittel (23) Wärme aufnimmt und dabei drittes gasförmiges Kältemittel austreibt.

4. Sorptionswärmepumpe (18, 55, 63) nach einem der vorgenannten Ansprüche, ***gekennzeichnet durch*** einen Niederdruckaustreiber (58) hinter dem Austreiber (56), in dem die abgereicherte Lösung Wärme aus der reichen Lösung vor dem Drosselventil (30, 60) aufnimmt und dabei viertes gasförmiges Kältemittel austreibt.

5. Sorptionswärmepumpe (18, 37) nach einem der Ansprüche 2 bis 4, ***gekennzeichnet durch*** einen Lösungswärmeübertrager (36, 46), in dem die arme Lösung Wärme aus der reichen Lösung vor dem Drosselventil (30, 54) aufnimmt.

6. Sorptionswärmepumpe (18, 37, 47, 55, 63) nach einem der vorgenannten Ansprüche, ***dadurch gekennzeichnet, dass*** das Lösungsmittel (22) Wasser und das Kältemittel (33) Ammoniak ist.

7. Sorptionskreisprozess mit einem gasförmigen Kältemittel (33) und einem flüssigen Lösungsmittel (22), einer abgereicherten und einer reichen Lösung, wobei die abgereicherte und die reiche Lösung einphasige Mischungen des Lösungsmittels (22) und des Kältemittels (33) sind, und wobei die abgereicherte Lösung das Kältemittel (33) absorbiert und dabei Wärme abgibt, dann die reiche Lösung erst entspannt wird, anschließend Wärme aufnimmt und dabei das Kältemittel (33) austreibt, dann das Kältemittel (33) von der reichen Lösung abgeschieden und verdichtet, und die abgereicherte Lösung gepumpt wird, ***dadurch gekennzeichnet, dass*** die abgereicherte Lösung Wärme aus der reichen Lösung aufnimmt und dabei zweites gasförmiges Kältemittel (23) austreibt.

8. Sorptionskreisprozess nach dem vorgenannten Anspruch, ***dadurch gekennzeichnet, dass*** aus der abgereicherten Lösung nach Aufnehmen der Wärme das zweite Kältemittel (23) abgeschieden, mit dem Kältemittel (33) zusammengeführt und verdichtet, und eine arme Lösung gepumpt wird, wobei die arme Lösung eine zweite einphasige Mischung des Lösungsmittels (22) und des Kältemittels (33) ist.

9. Sorptionskreisprozess nach einem der vorgenannten Ansprüche 7 und 8, ***dadurch gekennzeichnet, dass*** die abgereicherte Lösung beim Absorbieren des Kältemittels (33) die Wärme an Hochdruckheißwasser mit einer Zulauftemperatur oberhalb 100 °*C*, insbesondere oberhalb 120 °*C* abgibt.

10. Sorptionskreisprozess nach einem der Ansprüche 7 bis 9, ***dadurch gekennzeichnet, dass*** die entspannte reiche Lösung die Wärme aus Wasser mit einer Zulauftemperatur unterhalb 100 °*C* aufnimmt.

## Claims

1. A sorption heat pump (18, 37, 47, 55, 63) having: gaseous refrigerant (33) and liquid solvent (22); a depleted and a rich solution, the depleted and rich solutions being single-phase mixtures of the solvent (22) and the refrigerant (33); an absorber (29, 45, 50, 62, 66) in which the depleted solution absorbs the refrigerant (33) and emits heat in the process; a butterfly valve (30, 54, 60) which expands the rich solution; an expeller (44, 51, 56) in which the rich solution absorbs heat and in the process expels the refrigerant (33); a compressor (32, 41) which compresses the refrigerant (33); and a pump (26, 43, 64) which pumps the depleted solution; pipes connecting the absorber (29, 45, 50, 62, 66), the butterfly valve (30, 54, 60) and the expeller (44, 51, 56) and, parallel to each other, the compressor (32, 41) and the pump (26, 43, 64) in the stated order to form a closed cyclic system,
**characterised by**
a second expeller (27, 38, 52, 59) downstream of the expeller (44, 51, 56), in which the depleted solution absorbs heat from the rich solution and in the process expels second gaseous refrigerant (23).

2. The sorption heat pump (18, 37, 47, 55) according to the preceding claim,
**characterised by**
a second pump (35), which pumps a weak solution, the weak solution being a second single-phase mixture of the solvent (22) and the refrigerant (33), and a second compressor (34) which further compresses the second refrigerant (23), wherein bypass lines connect the second expeller (27, 38, 52, 59) to the absorber (29, 45, 50, 62) via the second pump (35, 48) on one side and to a stub which merges the second refrigerant (23) with the refrigerant (33) on the other side, in parallel to each other.

3. The sorption heat pump (18, 37, 47, 55) according to any one of the preceding claims,
**characterised by**
a hot gas cooler (40, 53, 61) in which the depleted solution absorbs heat from the compressed second refrigerant (23) and in the process expels third gaseous refrigerant.

4. The sorption heat pump (18, 55, 63) according to any one of the preceding claims,
**characterised by**
a low-pressure expeller (58) downstream of the expeller (56), in which the depleted solution absorbs heat from the rich solution upstream of the butterfly valve (30, 60) and in the process expels fourth gaseous refrigerant.

5. The sorption heat pump (18, 37) according to any one of Claims 2 to 4,
**characterised by**
a solution heat exchanger (36, 46) in which the weak solution absorbs heat from the rich solution upstream of the butterfly valve (30, 54).

6. The sorption heat pump (18, 37, 47, 55, 63) according to any one of the preceding claims,
**characterised in that**
the solvent (22) is water and the refrigerant (33) is ammonia.

7. A sorption cycle having a gaseous refrigerant (33) and a liquid solvent (22), a depleted and a rich solution, the depleted and rich solutions being single-phase mixtures of the solvent (22) and the refrigerant (33), and in which the depleted solution absorbs the refrigerant (33), emitting heat in the process, then the rich solution is expanded, then absorbs heat and in the process expels the refrigerant (33), then the refrigerant (33) is separated out of the rich solution and compressed, and the depleted solution is pumped, **characterised in that**
the depleted solution absorbs heat from the rich solution and in the process expels second gaseous refrigerant (23).

8. The sorption cycle according to the preceding claim, **characterised in that**
after absorption of the heat, the second refrigerant (23) is separated out of the depleted solution, merged with the refrigerant (33) and compressed, and a weak solution is pumped, wherein the weak solution is a second single-phase mixture of the solvent (22) and the refrigerant (33).

9. The sorption cycle according to any one of the preceding Claims 7 and 8,
**characterised in that**
during absorption of the refrigerant (33), the depleted solution emits the heat to high-pressure hot water at a feed temperature above 100 °C, in particular above 120 °C.

10. The sorption cycle according to any one of Claims 7 to 9,
**characterised in that**
the expanded rich solution absorbs the heat from water at a feed temperature below 100 °C.

## Revendications

1. Pompe à chaleur à sorption (18, 37, 47, 55, 63) avec frigorigène gazeux (33) et solvant liquide (22), une solution appauvrie et une solution riche, sachant que la solution appauvrie et la solution riche sont des mélanges monophasés du solvant (22) et du frigorigène (33), et avec un absorbeur (29, 45, 50, 62, 66), dans lequel la solution appauvrie absorbe le frigorigène (33) et dégage à cet effet de la chaleur, une vanne papillon (30, 54, 60), qui détend la solution riche, un bouilleur (44, 51, 56) dans lequel la solution riche reçoit de la chaleur et évacue à cet effet le frigorigène (33), un compresseur (32, 41), qui comprime le frigorigène (33) et une pompe (26, 43, 64), qui pompe la solution appauvrie, sachant que des conduites relient dans cet ordre l'absorbeur (29, 45, 50, 62, 66), la vanne papillon (30, 54, 60) et le bouilleur (44, 51, 56) ainsi que parallèlement l'un à l'autre d'une part le compresseur (32, 41) et d'autre part la pompe (26, 43, 64) à un système fermé circulaire, ***caractérisée par*** un deuxième bouilleur (27, 38, 52, 59) derrière le bouilleur (44, 51, 56), dans lequel la solution appauvrie reçoit de la chaleur de la solution riche et évacue à cet effet le deuxième frigorigène gazeux (23).

2. Pompe à chaleur à sorption (18, 37, 47, 55) selon la revendication précédente, ***caractérisée par*** une deuxième pompe (35), qui pompe une solution pauvre, sachant que la solution pauvre est un deuxième mélange monophasé du solvant (22) et du frigorigène (33) et un deuxième compresseur (34), qui continue à comprimer le deuxième frigorigène (23), sachant que des conduites de dérivation relient le deuxième bouilleur (27, 38, 52, 59) parallèlement l'une à l'autre d'une part par la deuxième pompe (35, 48) à l'absorbeur (29, 45, 50, 62) et d'autre part à une conduite de branchement, qui réunit le deuxième frigorigène (23) au frigorigène (33) .

3. Pompe à chaleur à sorption (18, 37, 47, 55) selon l'une quelconque des revendications précédentes, ***caractérisée par*** un refroidisseur de gaz chaud (40, 53, 61) dans lequel la solution appauvrie reçoit de la chaleur du deuxième frigorigène comprimé (23) et évacue à cet effet le troisième frigorigène gazeux.

4. Pompe à chaleur à sorption (18, 55, 63)) selon l'une quelconque des revendications précédentes, ***caractérisée par*** un bouilleur basse pression (58) derrière le bouilleur (56), dans lequel la solution appauvrie reçoit de la chaleur de la solution riche avant la vanne papillon (30, 60) et évacue à cet effet le quatrième frigorigène gazeux.

5. Pompe à chaleur à sorption (18, 37) selon l'une quelconque des revendications 2 à 4, ***caractérisée par*** un échangeur thermique de solution (36, 46) dans lequel la solution pauvre reçoit de la chaleur de la solution riche avant la vanne papillon (30, 54).

6. Pompe à chaleur à sorption (18, 37, 47, 55, 63 selon l'une quelconque des revendications précédentes, ***caractérisée en ce que*** le solvant (22) est de l'eau et le frigorigène (33) de l'ammoniac.

7. Processus à circuit de sorption avec un frigorigène gazeux (33) et un solvant liquide (22), une solution appauvrie et une solution riche, sachant que la solution appauvrie et la solution riche sont des mélanges monophasés du solvant (22) et du frigorigène (33) et sachant que la solution appauvrie absorbe le frigorigène (33) et dégage à cet effet de la chaleur, la solution riche est alors ensuite détendue, puis reçoit de la chaleur, et évacue à cet effet le frigorigène (33), le frigorigène (33) est ensuite séparé de la solution riche et comprimé et la solution appauvrie est pompée, ***caractérisé en ce que*** la solution appauvrie reçoit de la chaleur de la solution riche et évacue à cet effet le deuxième frigorigène gazeux (23).

8. Processus à circuit de sorption selon la revendication précédente, ***caractérisée en ce* qu'**après réception de la chaleur, le deuxième frigorigène (23) est séparé de la solution appauvrie, est réuni au frigorigène (33) et comprimé et une solution pauvre est pompée, sachant que la solution pauvre est un deuxième mélange monophasé du solvant (22) et du frigorigène (33).

9. Processus à circuit de sorption selon l'une quelconque des revendications 7 à 8, ***caractérisée en ce que*** la solution appauvrie évacue lors de l'absorption du frigorigène (33) la chaleur sur de l'eau chaude à haute pression avec une température d'arrivée supérieure à 100 °C, en particulier supérieure à 120 °C.

10. Processus à circuit de sorption selon l'une quelconque des revendications 7 à 9, ***caractérisée en ce que*** la solution riche détendue reçoit la chaleur venant de l'eau avec une température d'arrivée inférieure à 100 °C.
